(19) Europäisches Patentamt
European Patent Office
Office européen des brevets

(11) Veröffentlichungsnummer: **0 254 988**
**A2**

# (12) EUROPÄISCHE PATENTANMELDUNG

(21) Anmeldenummer: **87110338.8**

(22) Anmeldetag: **17.07.87**

(51) Int. Cl.⁴: **C09B 67/24**, D06P 1/39, C09B 69/02

(30) Priorität: **01.08.86 DE 3626049**

(43) Veröffentlichungstag der Anmeldung: **03.02.88 Patentblatt 88/05**

(84) Benannte Vertragsstaaten: **CH DE FR LI**

(71) Anmelder: **BAYER AG**
**Konzernverwaltung RP Patentabteilung**
**D-5090 Leverkusen 1 Bayerwerk(DE)**

(72) Erfinder: **Petroll, Hans-Werber, DI**
**Buschweg 1**
**D-5067 Kürten-Herweg 3(DE)**
Erfinder: **Paulat, Volker, Dr.**
**Menzelweg 1**
**D-4019 Monheim(DE)**
Erfinder: **Kunert, Friedrich-Franz, Dr.**
**Heidberg 11a**
**D-5090 Leverkusen(DE)**
Erfinder: **Gleinig, Harald, Dr.**
**Caixa Postal 22532 Rua Domingos Jonge 1000**
**1000 Sao-Paulo-SP(BR)**
Erfinder: **Wolf, Karlheinz, Dr.**
**Paul-Klee-Strasse 77**
**D-5090 Leverkusen(DE)**

## (54) Verfahren zur Herstellung von Farbstoffpräparationen.

(57) Elektrolytarme und im Anwendungsmedium leicht lösliche Präparationen anionischer Farbstoffe erhält man in einfacher, wirtschaftlicher Weise, indem man den bei der Synthese anfallenden Farbstoff in das schwerlösliche Ca-oder Mg-Salz überführt und dieses nach dessen Isolierung mit einem Komplexbildner behandelt.

Das Verfahren eignet sich auch zur Herstellung von hochkonzentrierten Farbstofflösungen.

EP 0 254 988 A2

Xerox Copy Centre

## Verfahren zur Herstellung von Farbstoffpräparationen

Gegenstand der Erfindung ist ein Verfahren zur Herstellung elektrolytarmer, im Anwendungsmedium leicht löslicher, fester, vorzugsweise aber hochkonzentrierter flüssiger Präparationen von anionischen Farbstoffen.

Es ist bereits bekannt, solche Präparationen dadurch herzustellen, daß man die die Löslichkeit beeinträchtigenden Fremdionen aus den Rohfarbstoffen durch Fällungsreaktionen abtrennt (vgl. DE-A 2 451 219 und 2 451 257 = GB-A 1 480 712 bzw. US-A 4 163 012).

Diese Technik besitzt allerdings u.a. den Nachteil, daß sie nicht universell anwendbar ist.

Gute Ergebnisse liefern in mehrfacher Hinsicht auch diverse literaturbekannte Membrantrennverfahren (vgl. z.B. EP-A 59 782, 114 031 und 126 830 sowie GB-A 2 015 018), die jedoch sehr zeit-und kostenaufwendig sind.

Ein weiteres bekanntes Herstellungsprinzip besteht darin, daß man den Farbstoff als schwerlösliches Erdalkali-oder Schwermetallsalz (beispielsweise das Ca-Salz aus dem bei der Farbstoffsynthese anfallenden Reaktionsgemisch) ausfällt, isoliert, gegebenenfalls reinigt und mit einem anderen Salz behandelt, dessen Anion (z.B. Sulfation) mit dem zur Bildung des schwer löslichen Farbstoffsalzes verwendeten Kation ein noch schwerer lösliches Salz bildet und dieses abtrennt (vgl. DE-A 3 443 305 und 2 115 877, EP-A 183 142, CS-A 178 954 = C.A. 92, 78 078 sowie JA-A 58/222 156 und 58/174 448).

Nachteilig an diesen Verfahren sind die zwei Filtrationsschritte sowie die Tatsache, daß die Abtrennung des schwerer löslichen Salzes (in der Regel Gips) hinsichtlich der Filtrierbarkeit und der Deponie beträchtliche Probleme verursacht.

Auch das Arbeiten mit Filtrationshilfsmitteln gemäß GB-A 2 164 349 erfordert zwei Filtrationen.

Es wurde nun gefunden, daß man auf den zweiten, meist aufwendigen Filtrationsschritt verzichten kann, wenn man das Kation des schwerlöslichen Farbstoffsalzes durch Behandlung mit einem säuregruppenhaltigen wasserlöslichen Komplexbildner komplexiert und durch ein die Löslichkeit des gefällten Farbstoffs verbesserndes Kation ersetzt.

Die Verwendung von Komplexbildnern bei der Herstellung von konzentrierten Farbstofflösungen ist an sich nichts Neues (vgl. US-A 4 502 864), jedoch werden hierbei die vergleichsweise leicht löslichen Alkalisalze der Farbsäuren mit Kronenethern, also hochtoxischen Substanzen, behandelt.

Als anionische Farbstoffe im Sinne der Erfindung kommen solche in Betracht, die wasserlöslich machende Gruppen (wie COOH und insbesondere $SO_3H$ bzw. deren leichtlöslichen Salze) enthalten und mit Erdalkali-oder Schwermetallkationen in $H_2O$ schwerlösliche Salze bilden.

Solche Farbstoffe sind z.B. Phthalocyanin-, Nitro-, Di-oder Triarylmethan-, Oxazin-, Thiazin-, Dioxazin-, Xanthen-, Formazan-, und Anthrachinonfarbstoffe und vorzugsweise Azofarbstoffe der Monoazo-, Diazo-und Polyazoreihe. Unter "Farbstoffen" sollen im übrigen auch optische Aufheller verstanden werden.

Geeignete Erdalkali-und Schwermetallkationen sind z.B. $Ca^{++}$, $Mg^{++}$, $Zn^{++}$, $Sn^{++}$, $Fe^{+++}$ und $Al^{+++}$.

Als Komplexbildner kommen solche Verbindungen in Betracht, die mit diesen Ionen stabile Komplexe bilden können mit einer resultierenden freien Kationenkonzentration, die kleiner ist, als die Kationenkonzentration die dem Löslichkeitsprodukt des schwerlöslichen Farbstoffsalz entspricht und damit die - schwerlöslichen Farbstoffsalze auflösen.

Geeignete Komplexbildner sind beispielsweise Amino-und Nitrilocarbonsäuren wie Nitrilotriessigsäure, Ethylendiamintetraessigsäure, Diethylentriaminpentaessigsäure sowie phosphorhaltige Säuren wie Phosphonobutantricarbonsäure, Phosphonobernsteinsäure, Phosphonopropionsäure, Polyphosphorsäure bzw. deren Alkali-Salze oder deren Mischungen sowie zur Komplexierung fähige, wasserlösliche Silikate.

Werden die Komplexbildner als freie Säuren eingesetzt, so ist eine Neutralisierung vollständig oder teilweise mit Natrium-oder Lithiumhydroxiden oder -carbonaten oder mit Amin-oder Ammoniumbasen erforderlich.

Geeignete löslichkeitsverbessernde Kationen, die die Erdalkali-bzw. Schwermetallionen ersetzen, sind Alkali-und Ammoniumionen, insbesondere $Na^+$, $Li^+$ und $NH_4^+$ und $K^+$.

Zur Herstellung einer gebrauchsfertigen Zubereitung können den erfindungsgemäß erhältlichen Präparationen weitere Zusätze wie übliche Stellmittel (z.B. Dextrin, Harnstoff, Zucker), anorganische Salze (z.B. Natriumchlorid, Natriumsulfat, Soda, Trinatriumphosphat), anionische Tenside (z.B. Ligninsulfonate, Alkylschwefelsäuren, Alkylnaphthalinsulfonsäuren oder Alkylbenzolsulfonsäuren bzw. deren Salze), nichtionogene Tenside (z.B. Ethylenoxidaddukte an langkettige Alkohole oder Alkylphenole) Polyvinylalkohole, Polyvinylpyrrolidone sowie Entstaubungsmittel (z.B. Öl-Emulgator-Mischungen oder Phthalsäureester) beigemischt werden.

Das erfindungsgemäße Verfahren erlaubt eine kostengünstige und umweltfreundliche Ausfällung der anionischen Farbstoffe und nutzt dabei bewußt die Unlöslichkeit der Metallfarbstoffsalze zur Ausbeutesteigerung, da durch den nachfolgenden Schritt der Komplexierung die Wasserlöslichkeit der ausgefällten Farbstoffe wiederhergestellt wird.

Zur Fällung der sauren Farbstoffe wird pro Mol Farbstoff mindestens 1/2 Mol zweiwertiges oder 1/3 Mol dreiwertiges Fällungsmittel, vorzugsweise etwa 1 Mol davon oder deren Mischungen gegebenenfalls in Beisein von Alkalisalzen eingesetzt.

Als Fällungsmittel dienen die bevorzugt löslichen Salze der genannten Metallkationen wie z.B. $MgCl_2$, $MgSO_4.7H_2O$, $Mg(CH_3COO)_2{\bullet}4H_2O$, $CaCl_2$, $ZnCl_2$, $ZnSO_4$, $SnCl_2$, $FeCl_3{\bullet}6H_2O$, $FeSO_4{\bullet}7H_2O$, $AlCl_3{\bullet}6H_2O$ oder $Al_2(SO_4)_3{\bullet}18H_2O$. Bevorzugt sind Mg-, Ca-, Fe-und Al-Salze.

In sauren Medien werden die entsprechenden Basen eingesetzt.

Die auszufällenden Farbstoffe liegen in der Regel entweder als freie Farbsäuren oder vorzugsweise in Form der Natriumsalze vor, wie sie bei der Farbstoffsynthese anfallen.

Man kann jedoch die Synthesebedingungen auch so wählen, daß die schwerlöslichen Farbstoff-Salze unmittelbar entstehen, indem man beispielswiese die Diazotierung mittels Calciumnitrit durchführt und/oder zur Neutralisie rung der Kupplungs-oder Sulfierungsreaktionsgemische Calcium-oder Magnesiumhydroxide verwendet.

Die erfindungsgemäß erhältlichen Präparationen können - wie bereits oben erwähnt - sowohl in fester als auch in flüssiger Form vorliegen.

Bei der praktischen Durchführung des Verfahrens zur Herstellung fester Präparationen stehen mindestens zwei Varianten zur Verfügung.

In einem Falle wird der ausgefällte Farbstoff abgesaugt, gegebenenfalls gewaschen, mit den üblichen Hilfsmitteln versetzt, getrocknet und gegebenenfalls gemahlen und danach mit dem Komplexbildner (vorzugsweise in Form des festen Alkalisalzes) vermischt. Bei derartigen Präparationen erfolgt die Komplexierung erst im Färbebad.

Bei einer anderen Variante wird das isolierte Metallfarbstoffsalz vorzugsweise in Form des feuchten Peßkuchens mit den üblichen Hilfsmitteln sowie dem Komplexbildner verschnitten, getrocknet und gegebenenfalls gemahlen und/oder nachentstaubt.

Die Trocknung kann z.B. eine Blechtrocknung, Schaufeltrocknung oder Walzentrocknung sein, ebenso kann aber eine Sprühtrocknung oder Wirbelschichtgranulation durchgeführt werden.

Das erfindungsgemäße Verfahren eignet sich aus zur Herstellung von wäßrigen Farbstofflösungen, die mindestens 10 Gew.-%, vorzugswiese 15-30 Gew.-%, Reinfarbstoff enthalten.

Bei der Herstellung dieser Lösungen geht man zweckmäßigerweise so vor, daß man den ausgefällten Farbstoff als Preßkuchen oder getrocknete Ware mit der berechneten Menge Wasser verdünnt und den Komplexbildner sowie gegebenenfalls löslichkeitsverbessernde Mittel und/oder wassermischbare Lösungsmittel zusetzt. Geeignete Zusatzstoffe sind z.B. Harnstoff, Dimethylharnstoff, Caprolactam, Diethylamin, Glykole, Polyvinylalkohole und Polyvinylpyrrolidone.

Die nach diesem Verfahren erhältlichen Lösungen zeichnen sich dadurch aus, daß sie auch über größere Zeiträume selbst bei Temperaturen um den Gefrierpunkt unverändert haltbar sind.

Die festen und flüssigen Verfahrensprodukte finden vielerlei Verwendung, z.B. für die Zubereitung von Färbebädern oder Druckpasten zum Färben bzw. Bedrucken von textilen Substraten aus Baumwolle, Regeneratcellulose, Wolle, Papier und Leder.

## Beispiel 1

Aus 10 l einer nach der Synthese vorliegenden, ca. 3,5 %igen Lösung des Farbstoffes C.I. Direct Blue 78 (C.I. 34200) wird der Farbstoff mit 140 g NaCl und 200 g $MgSO_4.7H_2O$ ausgefällt, abfiltriert, gewaschen und getrocknet.

42 g des so hergestellten, getrockneten, schwerlöslichen Farbstoffes werden mit 17 g Trilon B (Tetranatriumsalz der Ethylendiamintetraessigsäure) 3 g $LiOH.H_2O$ und 36 g Dextrin gemahlen und gemischt und mit 2 g eines Öl-Emulgatorgemisches entstaubt. Man erhält 100 g einer staubarmen Farbstoff-Präparation mit einer Löslichkeit bei 90°C von 40 g/l und einer Lösungsbeständigkeit 90°C/25°C von 40 g/l.

Beispiel 2

42 g des nach Beispiel 1 hergestellten, getrockneten, schwerlöschlichen Farbstoffes werden mit 25 g Calgon N der Fa. Benckiser-Knapsack (Na-Salz eines mittelkettigen Polyphosphates) und 31 g Dextrin gemahlen und gemischt und mit 2 g eines Öl-Emulgatorgemisches entstaubt. Man erhält eine staubarme Farbstoffpräparation mit den gleichen guten Lösungseigenschaften wie die Farbstoffpräparation aus Beispiel 1.

Beispiel 3

1139 g eines nach Beispiel 1 hergestellten Preßkuchens (entspricht 342 g Trockenfarbstoff) werden mit 6 g $LiOH.H_2O$, 204 g Natriumhexametaphosphat der Fa. Benckiser-Knapsack und 650 ml vollentsalztem Wasser mit einem Ultra-Turrax angeschlagen und sprühgetrocknet (Zerstäubungsorgan: 2-Stoff-Düse) mit einer Eingangstemperatur von 180°C und einer Austragstemperatur von 80°C. Man erhält eine Farbstoffpräparation mit einer Löslichkeit bei 90°C von 30 g/l und einer Lösungsbeständigkeit von 25 g/l.

Beispiel 4

220 g eines nach Beispiel 1 hergestellten Preßkuchens (30 %ig) werden mit 1,5 g $LiOH.H_2O$, 24,5 g Trilon B und 1150 ml vollentsalztem Wasser mit einem Ultra-Turrax angeschlagen und wie in Beispiel 3 sprühgetrocknet. Anschließend wird mit 3 % eines Öl-Emulgatorgemisches nachentstaubt. Man erhält eine staubarme Farbstoffpräparation mit einer Löslichkeit bei 90°C von 20 g/l und einer Lösungsbeständigkeit von 20 g/l.

Beispiel 5

1000 ml einer 16,5 %igen Lösung/Suspension des Farbstoffs der Formel

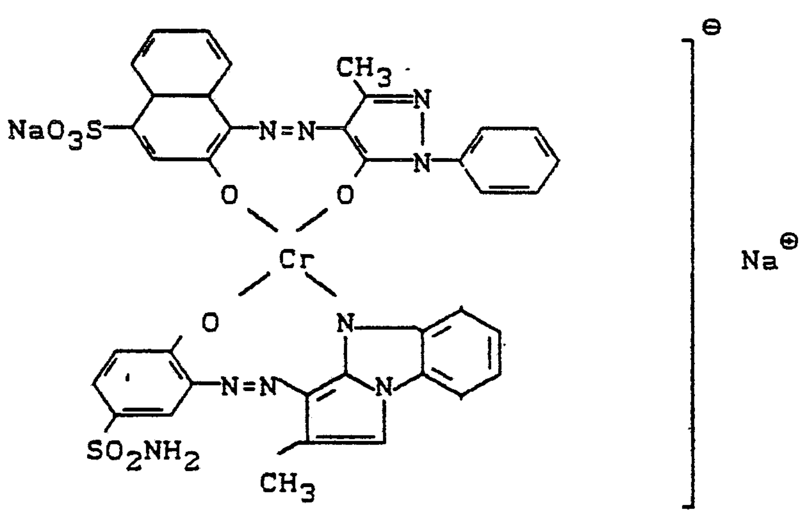

werden auf ca. 80°C erhitzt und mit 50 g $CaCl_2.6H_2O$ ausgefällt, filtriert, gewaschen und getrocknet. 45 g des so hergestellten, schwerlöslichen Farbstoffes werden mit 3 g Luviskol K 30, 3 g $LiOH.H_2O$ und 48 g Natriumhexametaphosphat der Fa. Benckiser-Knapsack gemahlen und gemischt und mit 1 g eines Öl-Emulgatorgemisches entstaubt. Man erhält eine staubarme Farbstoffpräparation mit guten Lösungseigenschaften.

Beispiel 6

2000 ml einer 5 %igen Lösung des anionischen Farbstoffs der Formel

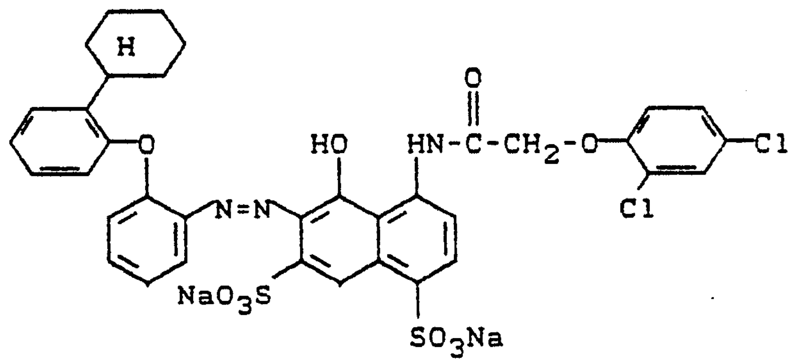

werden auf ca. 80°C erhitzt und mit 48 g Mg $(CH_3COO)_2.4H_2O$ ausgefällt, filtriert, gewaschen und getrocknet.

40 g des so hergestellten schwerlöslichen Farbstoffes werden mit 10 g Mowiol N 30-88 der Fa. Hoechst und 46 g Trilon B gemahlen und gemischt und mit 4 g eines Öl-Emulgatorgemisches entstaubt. Es wird eine staubarme Farbstoffpräparation mit guten Lösungseigenschaften erhalten.

Beispiel 7

5000 ml einer 3 %igen Lösung des Farbstoffs der Formel

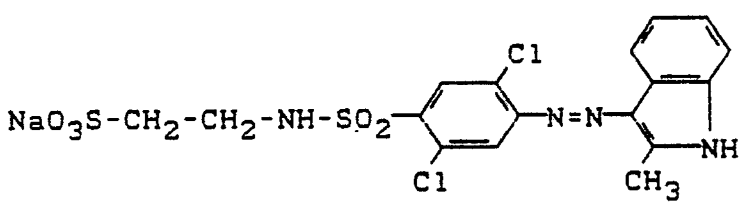

werden mit 17,5 g $CaCl_2$ wasserfrei ausgefällt, filtriert, gewaschen und getrocknet.

60 g des so hergestellten schwerlöslichen Farbstoffes werden mit 35 g Trilon B und 2 g $LiOH.H_2O$ gemahlen und gemischt und mit 3 g einer Öl-Emulgatormischung entstaubt. Man erhält eine staubarme Farbstoffpräparation mit guten Lösungseigenschaften, die sich hervorragend zur Herstellung von Färbebädern eignet.

Verfährt man wie oben, verzichtet aber auf den Zusatz des Komplexbilders, so erhält man ebenfalls eine gebrauchsfähige Präparation, die jedoch ihre Wirksamkeit erst dann entfaltet, wenn dem Färbebad ein Komplexbildner zugesetzt wird.

Beispiel 8

5000 ml einer 3 %igen Lösung des Farbstoffes aus Beispiel 7 werden mit 32 g Mg $(CH_3COO)_2.4H_2O$ ausgefällt, filtriert, gewaschen und getrocknet. 60 g des so hergestellten schwerlöslichen Farbstoffes werden mit 8 g Natriumhexametaphosphat, 29 g Rohrzucker gemahlen und gemischt und mit 3 g eines Öl-Emulgatorgemisches entstaubt. Man erhält eine staubarme Farbstoffpräparation mit guten Lösungseigenschaften.

Beispiel 9

7000 ml einer ca. 5 %igen Lösung des Farbstoffes

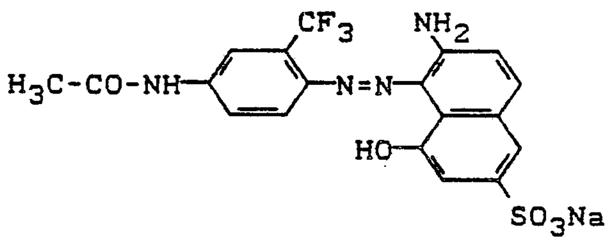

weden auf ca. 80°C erhitzt und mit 84 g $CaCl_2$ wasserfrei ausgefällt, filtriert und gewaschen.

285 g des so hergestellten Preßkuchens ca. 50 %ig werden mit 103 g Trilon B, 4,8 g Oleylalkohol mit 50 Mol Ethylenoxid ethoxyliert, 47 g eines Ligninsulfonates und 663 ml Wasser mit einem Ultra-Turrax angeschlagen und wie im Beispiel 3 sprühgetrocknet und mit 6 g eines Öl-Emulgatorgemisches nachentstaubt. Man erhält eine staubarme Farbstoffpräparation mit guten Lösungseigenschaften.

Beispiel 10

5000 ml einer ca. 4 %igen Lösung/Dispersion des blauen Farbstoffes mit folgender Konstitution

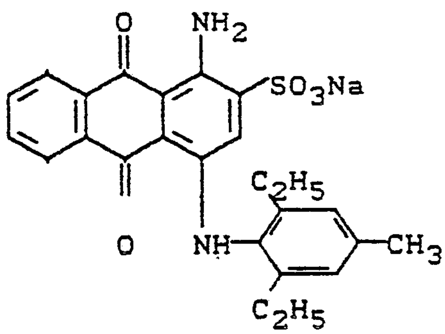

werden durch Zusatz von 45 g $FeCl_3$ ausgefällt, filtriert, gewaschen und getrocknet.

50 g des so hergestellten schwerlöslichen Farbstoffes werden mit 40 g Trilon B und 7 g Moviol N30-88 der Fa. Hoechst gemahlen und gemischt und mit 3 g einer Öl-Emulgatormischung entstaubt. Man erhält eines staubarme Farbstoffpräparation mit guten Lösungseigenschaften.

Beispiel 11

7000 ml einer ca. 3,5 %igen Lösung des Farbstoffes aus Beispiel 7 werden mit 10 %iger Schwefelsäure auf pH = 6 gestellt und mit 45 g $Mg(CH_3{\bullet}COO)_2{\bullet}4H_2O$ ausgefällt, filtriert, gewaschen und getrocknet.

In eine Lösung aus 146 g Trilon BS (Ethylendiamintetraessigsäure) der Fa. BASF und 84 g $LiOH{\bullet}H_2O$ in 1000 ml $H_2O$ werden 142 g des mit Magnesiumacetat ausgefällten Farbstoffes unter Rühren eingetragen und der pH-Wert mit $LiOH{\bullet}H_2O$ auf ca. 11,9 eingestellt und so lange gerührt, eventuell unter Erwärmung, bis eine klare Lösung entsteht. Man erhält 1000 ml einer lagerstabilen Farbstofflösung.

Beispiel 12

7000 ml einer ca. 3,5 %igen Lösung des Farbstoffes aus Beispiel 7 werden mit 10 %iger Schwefelsäure auf pH = 6 gestellt und mit 45 g Mg $(CH_3 \bullet COO)_2 \bullet 4H_2O$ ausgefällt und gewaschen.

300 g des so hergestellten 42 %igen Preßkuchens werden 826 ml Wasser angeschlagen und unter Rühren 146 g Trilon BS eingetragen, mit $LiOH \bullet H_2O$ auf pH = 11,9 eingestellt und so lange gerührt bis eine klare Lösung entsteht.

Man erhält 1000 ml einer klaren Farbstofflösung mit guter Lagerstabilität.

## Ansprüche

1. Verfahren zur Herstellung fester oder flüssiger Präparationen von anionischen Farbstoffen, dadurch gekennzeichnet, daß man das Kation der in Form des in Wasser schwerlöslichen Erdalkali-oder Schwermetallsalzes isolierten Farbstoffe mit Hilfe eines säuregruppenhaltigen wasserlöslichen Komplexbildners komplexiert und durch ein die Löslichkeit des Farbstoffs verbesserndes Kation ersetzt.

2. Verfahren nach Anspruch 1, dadurch gekennzeichnet, daß man den unmittelbar bei der Synthese anfallenden Farbstoff als schwerlösliches Metallsalz ausfällt, isoliert und mit dem Komplexbildner behandelt.

3. Verfahren nach Anspruch 1 oder 2, dadurch gekennzeichnet, daß man den bei der Farbstoffsynthese anfallenden Preßkuchen zur Herstellung des schwerlöslichen Metallsalzes einsetzt.

4. Verfahren nach Anspruch 1, dadurch gekennzeichnet, daß man den Farbstoff in Form des Ca-, Mg-, Fe-oder Al-Salzes isoliert.

5. Verfahren nach Anspruch 1, dadurch gekennzeichnet, daß man als Komplexbildner solche Verbindungen einsetzt, die mit Erdalkali-bzw. Schwermetallionen stabile Komplexe bilden mit einer resultierenden freien Kationenkonzentration, die kleiner ist, als die Kationenkonzentratien, die dem Löslichkeitsprodukt des schwerlöslichen Farbstoffsalzes entspricht.

7. Verfahren nach Anspruch 1, dadurch gekennzeichnet, daß man als Komplexbildner Polyphosphorsäuren oder deren Alaklisalze verwendet.

6. Verfahren nach Anspruch 1, dadurch gekennzeichnet, daß man als Komplexbildner Amino-, Nitrilo- oder Phosphonocarbonsäuren verwendet.

8. Verfahren nach Anspruch 1, dadurch gekennzeichnet, daß man konzentrierte flüssige Präparationen herstellt.

9. Verfahren nach Anspruch 1, dadurch gekennzeichnet, daß man feste Präparationen herstellt.

10. Verwendung der Verfahrensprodukte gemäß Anspruch 1 für die Zubereitung von Färbebädern oder Druckpasten.